# EUROPEAN PATENT SPECIFICATION

(11) **EP 1 336 466 B1**
(45) Date of publication and mention of the grant of the patent: **12.10.2005**
(21) Application number: 03250924.2
(22) Date of filing: 14.02.2003
(51) Int. Cl.: B29C 59/06, B26F 1/26, B29C 51/22, B26F 1/31

(54) **Method of making a topographical support member for producing apertured films**
Verfahren zur Herstellung eines topographischen Trägers zur Produktion von perforierten Filmen
Procédé de fabrication d'un élément de support topographique pour la production de films perforés

(30) Priority: 14.02.2002 US 356845 P
(43) Date of publication of application: 20.08.2003
(60) Divisional application: 05076548.6
(73) Proprietor: McNEIL-PPC, INC., Skillman, NJ 08558-9418 (US)
(72) Inventor: Kelly, William G. F., Middlesex, NJ 08846 (US); James, William A., Pennington, NJ 08534 (US)
(74) Representative: Mercer, Christopher Paul

(56) References cited:
- WO-A-95/23571
- WO-A-97/22434
- WO-A-99/30658
- US-A- 4 377 736
- US-A- 4 552 709
- US-A- 4 609 518
- US-A- 4 741 877
- US-A- 5 916 462
- US-A- 5 945 196

## Description

### BACKGROUND OF THE INVENTION

Apertured films have been known for many years. Various methods utilizing a variety of support members for producing apertured films are also known.

Typically, an apertured film is formed by causing a polymer film layer to conform to a support member having holes. The film layer to be apertured is placed on contact with the support member and subjected to a fluid pressure. The fluid pressure differential causes the film to conform to the shape of the forming surface and causes it to be apertured within the holes of the forming surface.

Known support members for producing apertured films include woven wire mesh and stamped, drilled, electroplated, or acid-etched metal screens. Descriptions of some of these known support members may be found in US 4,151,240 to Lucas et al., and US 4,342,314 to Radel et al. These support members and the resulting apertured films formed thereon have patterns that are limited to those that can either be woven in the case of the wire mesh, or stamped, drilled, electroplated, or acid-etched in the case of the metal screens.

WO9722434 discloses support members and methods of forming support members for use in producing nonwoven fabrics, especially tricot-like nonwoven fabrics, and films.

US5916462 discloses a method of forming an apertured support member accomplished by moving the laser beam in a series of raster scans over the surface of the workpiece.

US4377736 relates to material removal from a member surface, and more particularly to a method and apparatus for making, inspecting and controlling the position of small holes in a surface of a member, such as a sheet or panel member.

US4609518 describes a continuous, multi-phase process for debossing and perforating a substantially continuous web of substantially planar polymeric film to coincide with the image of one or more forming structures, each having a patterned forming surface with a multiplicity of holes and an opposed surface.

WO9523571 relates to a process for producing a formed polymeric web, and more particularly, to a process for producing a surfactant treated, formed, polymeric web.

WO9930658 discloses a process of forming a soft and resilient web exhibiting a substantially continuous pattern of debossments or apertures.

US4741877 relates to uniformly debossed and apertured, resilient plastic webs that exhibit fine-scale three-dimensional characteristics.

US4552709 provides a process for debossing and perforating a substantially continuous web of substantially planar thermoplastic film, using a forming structure having a patterned forming surface with holes and an opposed surface.

USS945196 discloses a method for the manufacture of a screen useful for forming three-dimensional films, the screens and the three-dimensional films produced using those screens are also disclosed.

### SUMMARY OF THE INVENTION

The present invention is directed to processes for forming a laser sculpted, three dimensional topographical support member for producing apertured films, and to the support member formed by such processes, which can be used to produce apertured films. In accordance with a preferred process of the present invention a laser beam is moved across the outside surface of a workpiece. The power of the laser beam is modulated as the laser beam is moved across the outside surface of the workpiece, thereby sculpting the surface of the workpiece. The sculpting of the workpiece results in the formation of a three dimensional topographical support member with a contoured outside surface comprising a plurality of disconnected macrofeatures. The macrofeatures project from the outside surface by at least about 0.127 millimetres (0.005 inches). The macrofeatures may originate from any location on the outside surface of the support member.

"Macrofeatures" are defined as surface features that are individually discernible by a normal unaided human eye when the perpendicular distance between the viewer's eye and the outside surface is about 304.8 millimetres (12 inches) or greater. "Disconnected" means that the macrofeatures are physically separated from one another in at least one cutting plane parallel to the surface of the support member. Each of these macrofeatures has a maximum dimension of greater than 0.2794 millimetres (0.011 inches) as measured in any cutting plane parallel to the outside surface of the workpiece. The macrofeatures themselves may be continuously contoured; that is, any two adjacent cutting planes through the depth of the support member may be different.

A three dimensional apertured film with a plurality of disconnected macrofeatures thereon may be prepared by forming a three dimensional topographical support member by moving a laser beam across the outside surface of a workpiece while modulating the power of the laser beam, thereby sculpting the outside surface of the workpiece; positioning a film across the sculpted, outside surface of the support member; and deforming the film such that its shape conforms to the outside surface of the support member. In one embodiment the film is heated, for example by hot air, prior to positioning it across the surface of the support member. In another embodiment, the film is made by extrusion immediately prior to positioning the film across the outside surface of the support member, with optional cooling between the extrusion step and the positioning step.
In another embodiment, an apertured film is produced by positioning a film across an outside surface of a three-dimensional topographical support member that is a unitary structure, said outside surface being contoured and comprising a plurality of disconnected macrofeatures; and deforming the film such that its shape conforms to the outside surface of the support member. Again, the film may be heated, for example by hot air, prior to positioning it across the surface of the support member, or the film may be made by extrusion immediately prior to positioning the film across the outside surface of the support member, with optional cooling between the extrusion step and the positioning step.

### BRIEF DESCRIPTION OF THE DRAWINGS

Fig. 1 is a schematic illustration of one type of three dimensional topographical support member of the present invention.
Fig. 2 is a schematic illustration of an apparatus for laser sculpting a workpiece to form a three dimensional topographical support member of the present invention.
Fig. 3 is a schematic illustration of a computer control system for the apparatus of Figure 2.
Fig. 4 is a graphical enlargement of an example of a pattern file to raster drill a workpiece to produce a support member for apertured film.
Fig. 5 is a graphical enlargement of a pattern file to laser mill a previously drilled workpiece to produce a type of three dimensional topographical support member of the present invention.
Fig. 6 is a photomicrograph of a workpiece after it has been laser drilled using the file of Fig. 5.
Fig. 6A is a photomicrograph of a workpiece after it has been laser milled.
Fig. 6B is a photomicrograph of a cross-section of the structure of 6A.
Fig. 7 is a photomicrograph of a film produced on the support member of Fig. 6.
Fig. 8 is a graphical representation of another file to laser mill a previously drilled workpiece to produce a type of three dimensional support member of this invention.
Fig. 9 is another graphical representation of another file to laser mill a previously drilled workpiece to produce another type of three dimensional topographical support member of this invention.
Fig. 10 is a graphical representation of a file to laser sculpt a workpiece to produce a three dimensional topographical support member of this invention.
Fig. 11 is a photomicrograph of a workpiece that was laser sculpted utilizing the file of Fig. 10.
Fig. 11A is a photomicrograph of a cross section of the laser sculpted workpiece of Fig. 11.
Fig. 12 is a photomicrograph of an apertured film produced using the laser sculpted support member of Fig. 11.
Fig. 12A is another photomicrograph of an apertured film produced using the laser sculpted support member of Fig. 11.
Fig. 13 is an example of a file which may be used to produce a laser sculpted support member by laser modulation.
Fig. 13A is a graphical representation of a series of repeats of the file of Fig. 13.
Fig. 14 is an enlarged view of portion A of the file of Fig. 13.
Fig. 15 is a graphical enlargement of a pattern file used to create portion B of Fig. 14.
Fig. 16 is a photomicrograph of a laser sculpted support member produced by laser modulation using the file of Fig. 13.
Fig. 17 is a photomicrograph of a portion of the laser sculpted support member of Fig. 16.
Fig. 18 is a photomicrograph of a film produced by utilizing the laser sculpted support member of Fig. 16.
Fig. 19 is a photomicrograph of a portion of the film of Fig. 18.
Fig. 20 is another example of a file to produce a laser sculpted support member by laser modulation.
Fig. 21 is a graphical representation of a series of repeats of the file of Fig. 20.
Fig. 22 is an enlarged view of portion C of the file of Fig. 20.
Fig. 23 is a graphical enlargement of a pattern file used to create portion D of Fig. 22.
Fig. 24 is a photomicrograph of a laser sculpted support member produced by laser modulation using the file of Fig. 20.
Fig. 25 is a photomicrograph of an apertured film produced on the support member of Fig. 24.
Fig. 26 is a schematic view of a support member according to this invention in place on a film-forming apparatus.
Fig. 27 is a schematic view of an apparatus for producing apertured films according to the present invention.
Fig. 28 is a schematic view of the circled portion of Fig. 27.

### DETAILED DESCRIPTION OF THE INVENTION

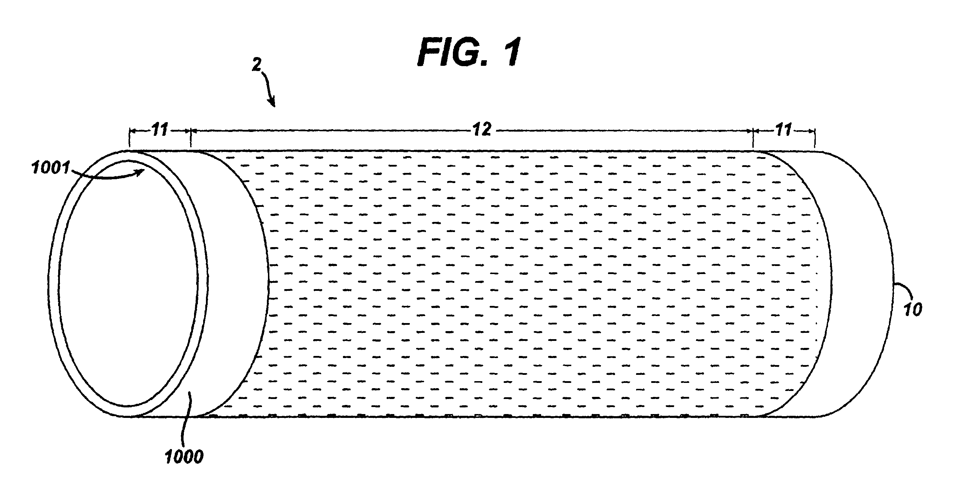

Referring now to the drawings, a schematic illustration of an exemplary workpiece that has been laser sculpted into a unitary, three dimensional topographical support member is shown in Figure 1.

The workpiece 2 comprises a thin tubular cylinder 10 having an inside surface 1001 and an outside surface 1000. The outside surface of the workpiece 2 has non-processed surface areas 11 and a laser sculpted center portion 12. A preferred workpiece for producing the support member of this invention is a thin-walled seamless tube of acetal, which has been relieved of all residual internal stresses. The workpiece has a wall thickness of from 1-8 mm, more preferably from 2.5-6.5 mm. Exemplary workpieces for use in forming support members are from 30.5 to 183 cm (one to six feet) in diameter and have a length ranging from 61 to 488 cm (two to sixteen feet). However, these sizes are a matter of design choice. Other shapes and material compositions may be used for the workpiece, such as acrylics, urethanes, polyesters, high molecular weight polyethylene and other polymers that can be processed by a laser beam.

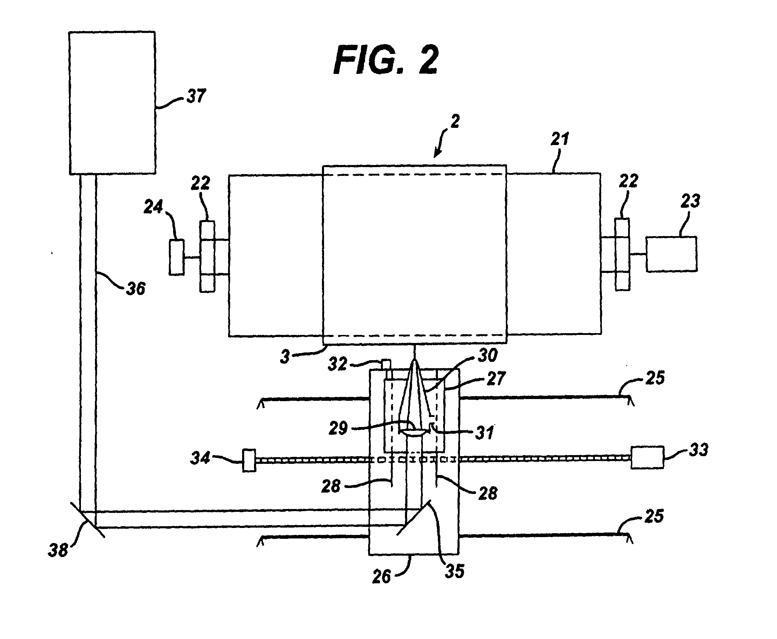

Referring now to Fig. 2, a schematic illustration of an apparatus for laser sculpting the support member of this invention is shown. A starting blank tubular workpiece 2 is mounted on an appropriate arbor, or mandrel 21 that fixes it in a cylindrical shape and allows rotation about its longitudinal axis in bearings 22. A rotational drive 23 is provided to rotate mandrel 21 at a controlled rate. Rotational pulse generator 24 is connected to and monitors rotation of mandrel 21 so that its precise radial position is known at all times.

Parallel to and mounted outside the swing of mandrel 21 is one or more guide ways 25 that allow carriage 26 to traverse the entire length of mandrel 21 while maintaining a constant clearance to the top surface 3 of tube 2. Carriage drive 33 moves the carriage along guide ways 25, while carriage pulse generator 34 notes the lateral position of the carriage with respect to support member 2. Mounted on the carriage is focusing stage 27. Focusing stage 27 is mounted in focus guide ways 28. Focusing stage 27 allows motion orthogonal to that of carriage 26 and provides a means of focusing lens 29 relative to top surface 3. Focus drive 32 is provided to position the focusing stage 27 and provide the focusing of lens 29.

Secured to focusing stage 27 is the lens 29, which is secured in nozzle 30. Nozzle 30 has means 31 for introducing a pressurized gas into nozzle 30 for cooling and maintaining cleanliness of lens 29. A preferred nozzle 30 for this purpose is described in US Patent 5,756,962 to James et al. which is incorporated herein by reference.

Also mounted on the carriage 26 is final bending mirror 35, which directs the laser beam 36 to the focusing lens 29. Remotely located is the laser 37, with optional beam bending mirror 38 to direct the beam to final beam bending mirror 35. While it would be possible to mount the laser 37 directly on carriage 26 and eliminate the beam bending mirrors, space limitations and utility connections to the laser make remote mounting far preferable.

When the laser 37 is powered, the beam 36 emitted is reflected by first beam bending mirror 38, then by final beam bending mirror 35, which directs it to lens 29. The path of laser beam 36 is configured such that, if lens 29 were removed, the beam would pass through the longitudinal center line of mandrel 21.
With lens 29 in position, the beam may be focused above, below, at, or near top surface 3.

While this invention could be used with a variety of lasers, the preferred laser is a fast flow CO₂ laser, capable of producing a beam rated at up to 2500 watts. However, slow flow CO₂ lasers rated at 50 watts could also be used.

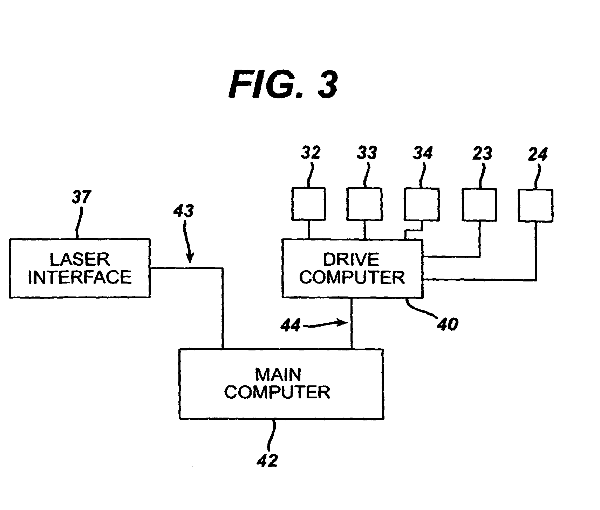

Figure 3 is a schematic illustration of the control system of the laser sculpting apparatus of Figure 2. During operation of the laser sculpting apparatus, control variables for focal position, rotational speed, and traverse speed are sent from a main computer 42 through connection 44 to a drive computer 40. The drive computer 40 controls focus position through focusing stage drive 32. Drive computer 40 controls the rotational speed of the workpiece 2 through rotational drive 23 and rotational pulse generator 24. Drive computer 40 controls the traverse speed of the carriage 26 through carriage drive 33 and carriage pulse generator 34. Drive computer 40 also reports drive status and possible errors to the main computer 42. This system provides positive position control and in effect divides the surface of the workpiece 2 into small areas called pixels, where each pixel consists of a fixed number of pulses of the rotational drive and a fixed number of pulses of the traverse drive. The main computer 42 also controls laser 37 through connection 43.

A unitary, laser sculpted three dimensional topographical support member may be made by several methods. One method of producing such a support member is by a combination of laser drilling and laser milling of the surface of a workpiece.

Methods of laser drilling a workpiece include percussion drilling, fire-on-the-fly drilling, and raster scan drilling.

In the method of using the laser to produce percussion drilling, the mandrel, with the tubular workpiece mounted thereon, is rotated in front of the lens. The carriage is motored so that the desired first aperture position corresponds with the focal point of the lens 29. The focus stage is motored inward, placing the focal point inside the interior of the material to be drilled. The laser is then pulsed, with some combination of pulse power level and duration. In order to achieve the desired topographical configuration, two factors need to be measured and controlled: the degree to which the lens is focused into the interior of the workpiece, and the power level or pulse duration of the laser. These factors affect the shape and depth of the hole imparted to the workpiece. Once a hole of the proper shape and depth is achieved, the rotational drive and carriage drive can be indexed to reposition the support member such that the next intended position corresponds to the focal point. The process is then repeated until the entire pattern has been drilled. This technique is known as "percussion" drilling.

If the laser selected is of sufficient power and is able to recover rapidly enough, the mandrel and carriage do not need to be stopped during the laser pulse. The pulse can be of such short duration that any movement of the workpiece during the drilling process is inconsequential. This is known in the trade as "fire-on-the-fly" drilling.

One problem that may occur with some types of laser drilling, depending on the type of material being drilled and the density of the aperture pattern, is the introduction of a large amount of heat into a small area of the support member. Gross distortion, and the loss of pattern registration may result. Under some conditions, major dimensional changes of the workpiece result, and the workpiece surface is neither cylindrical nor the right size. In extreme cases, the workpiece may crack due to heat induced stresses.

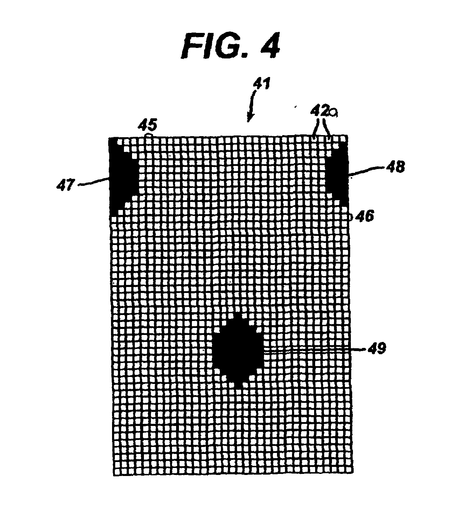

A laser drilling method that eliminates this problem uses a process called raster scan drilling. In this approach, the desired pattern is reduced to a rectangular repeat element 41 as depicted in the example of FIG. 4. This repeat element contains all of the information required to produce the desired pattern. When the rectangular repeat element 41 is used like a tile and placed both end-to-end and side-by-side, the larger desired pattern is the result.

This repeat element is further divided into a grid of smaller rectangular units or "pixels" 42a. Though typically square, for some purposes, it may be more convenient to employ rectangular pixels. The pixels themselves are dimensionless and the actual dimensions of the image are set during processing, that is, the width 45 of a pixel and the length 46 of a pixel are only set during the actual drilling operation. During drilling, the length of a pixel is set to a dimension that corresponds to a selected number of pulses from the carriage pulse generator 34. Similarly, the width of a pixel is set to a dimension that corresponds to the number of pulses from the rotational pulse generator 24. Thus, for ease of explanation, the pixels are shown to be square in Figure 4; however, it is not required that pixels be square, but only that they be rectangular.

Each column of pixels represents one pass of the workpiece past the focal position of the laser. This column is repeated as many times as is required to reach completely around support member 2. Each white pixel represents an off instruction to the laser, that is the laser is emitting no power, and each black pixel represents an on instruction to the laser, that is the laser is emitting a beam. This results in a simple binary file of 1's and 0's where a 1, or white, is an instruction for the laser to shut off and a 0, or black, is an instruction for the laser to turn on.

Referring back to Figure 3, the contents of an engraving file are sent in a binary form, where 1 is off and 0 is on, by the main computer 42 to the laser 37 via connection 43. By varying the time between each instruction, the duration of the instruction is adjusted to conform to the size of the pixel. After each column of the file is completed, that column is again processed, or repeated, until the entire circumference is completed. While the instructions of a column are being carried out, the traverse drive is moved slightly. The speed of traverse is set so that upon completion of a circumferential engraving, the traverse drive has moved the focusing lens the width of a column of pixels and the next column of pixels is processed. This continues until the end of the file is reached and the file is again repeated in the axial dimension until the total desired width is reached.

In this approach, each pass produces a number of narrow cuts in the material, rather than a large hole. Because these cuts are precisely registered to line up side-by-side and overlap somewhat, the cumulative effect is a hole.

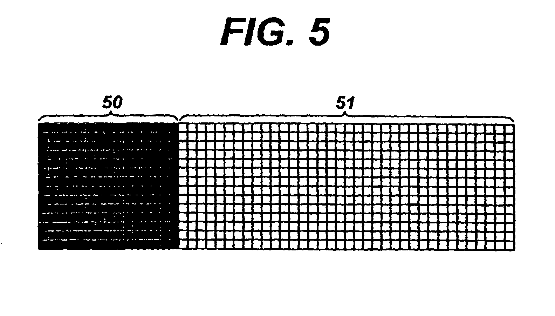

The file illustrated by Figure 5 is a second repeat file. This file consists of a number of columns of "on" instructions 50 to turn the laser on, followed by a number of columns of "off" instructions 51 to turn the laser off. This file, if processed at the same conditions as the file of Figure 4, as described above, would cut the workpiece into many circular rings. However, if the rotational speed of the workpiece is increased or the power of the laser is reduced, the processing of this file will result in the milling of a series of circumferential grooves in the workpiece, which can simulate embossed lines.

If the laser is turned on at full power, the depth and pattern of the sculpting on the workpiece may be effected by moving the workpiece in the axial and circumferential directions. This procedure may be described as conventional milling with a laser.

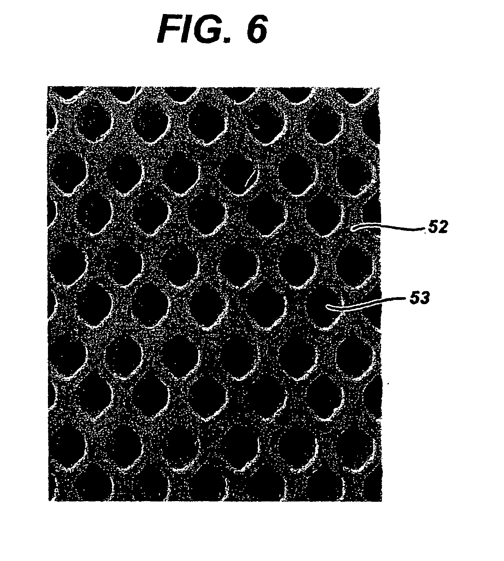

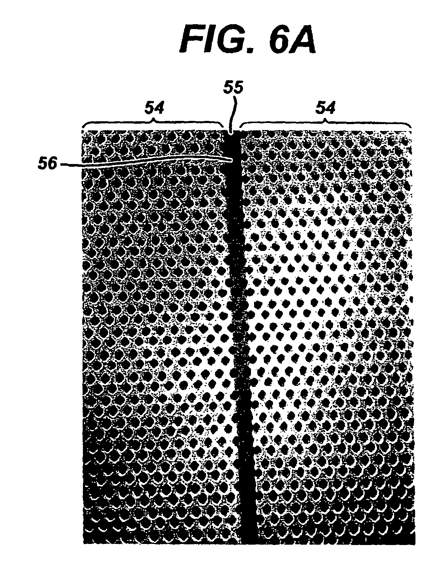

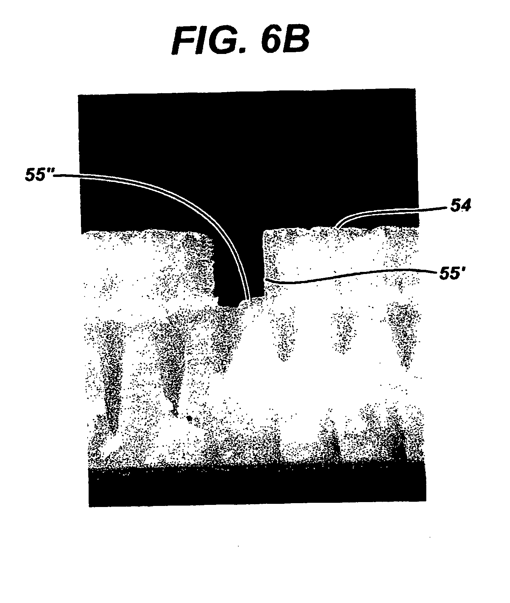

Figure 6 is a photomicrograph of a portion of a support member that has initially been raster scan drilled utilizing the file of Figure 4. The outside surface of the support member is a smooth planar surface 52 with a series of nested hexagonal holes 53. The file of Figure 5 was used to raster scan mill the drilled surface of Figure 6 to produce the surface of Figure 6A. The support member has alternating raised regions 54 and depressed regions 55. Figure 6B is a photomicrograph of a cross-portion of the structure of Figure 6A. The cross-section shows the flat planar areas 54' which correspond to the areas 54 of Figure 6A and depressed area 55' which corresponds to area 55 of Figure 6A and shows the depth of the milled area 55". The topmost portions of the raised regions 54 are unconnected to one another in the plane tangent to those topmost portions.

Depressed areas 55 also contain apertures 56 and thus can be designed to improve the properties of an apertured film. For example, if the apertured film is to be used as a body-facing layer on an absorbent article, the depressed areas can be used to improve the aesthetics of an apertured film by adding decorative elements, and to minimize surface area of the film's contact with a user's skin.

The method of first drilling the workpiece and then laser milling the drilled surface is preferred if deep milling is to be produced. This is to maintain a smooth outside surface in the drilled areas, since the focus position of the lens will shift relative to the surface as the depth of the surface moves away from the lens in the milled areas. However, if the depth of the milling operation is to be kept within the depth of focus of the lens, then milling can be done before the drilling.

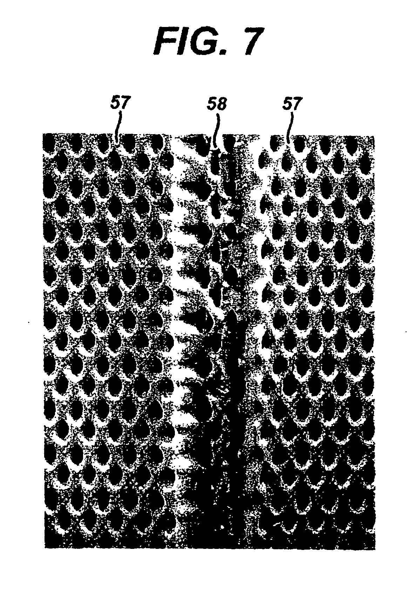

Figure 7 is an enlarged photograph of an apertured film produced on the support member of Figure 6A in accordance with this invention. The film has distinct apertured raised regions 57 corresponding to the raised regions 54 of Figure 6A. The film also has separate distinct depressed apertured regions 58 which correspond to the depressed regions 55 of Figure 6A. This provides an impression of an embossed apertured film.

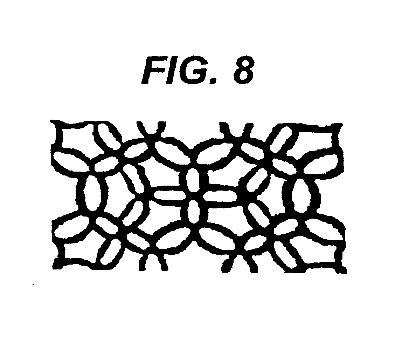

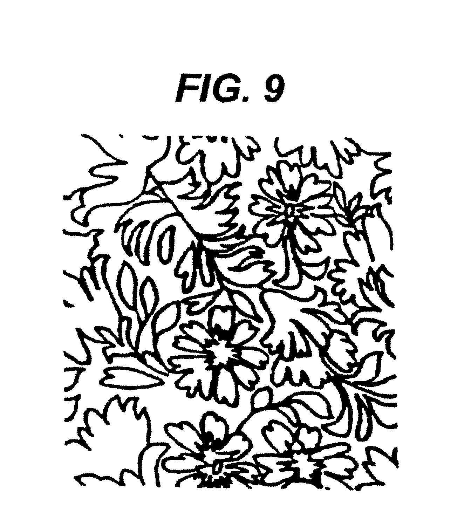

While the two-step operation of raster scan laser drilling and then raster scan laser milling a workpiece has been described utilizing a simple circumferential milling operation, the laser milling process is in no way limited to traditional milling or lathe operations. Figures 8 and 9 show additional patterns that can be raster scan laser milled into the surface of a raster scan laser drilled workpiece. This method can produce distinctive patterns that would be very difficult, if not impossible, to produce using conventional machining techniques.

A more preferred method for making unitary, laser sculpted three dimensional topographical support members of this invention is through laser modulation. Laser modulation is carried out by varying the laser power on a pixel by pixel basis. In laser modulation, the simple on or off instructions of raster scan drilling or raster scan milling are replaced by instructions that adjust the laser power to on or off or an intermediate level for each individual pixel of the laser modulation file. In this manner a three dimensional topography can be imparted to the outside surface of a workpiece with a single pass of the laser over the workpiece.

Laser modulation has several advantages over other methods of producing a three dimensional topographical support member. Laser modulation produces a one-piece, seamless, support member without the pattern mismatches caused by the presence of a seam. With laser modulation, the support member is completed in a single operation instead of multiple operations, thus increasing efficiency and decreasing cost. Laser modulation eliminates problems with the registration of patterns, which can be a problem in a multi-step sequential operation. Laser modulation also allows for the creation of topographical features with complex geometries over a substantial distance. By varying the instructions to the laser, the depth and shape of a feature can be precisely controlled and features that continuously vary in cross section can be formed.

Laser modulation also eliminates pattern mismatches that result from thermal distortion. In the combined operations of laser drilling and laser milling, if the amount of laser power, as measured by the percent of the processing time the laser is on, during laser drilling does not match the amount of laser power during laser milling, then each operation is conducted under a different set of thermal condicions. This results in a workpiece being processed at different temperatures. The difference in thermal expansion at the different temperatures of each operation can result in the two patterns not matching. The inability to register the different operations limits the shape and complexity of patterns that can be processed. This thermally-induced mismatch in the patterns does not occur with laser modulation, since processing of a workpiece is completed in a single step.

Referring again to Figure 3, during laser modulation the main computer 42 may send instructions to the laser 37 in other than a simple "on" or "off" format. For example, the simple binary file may be replaced with an 8 bit (byte) format, which allows for a variation of 256 possible levels in power emitted by the laser. Utilizing a byte format, the instruction "11111111" instructs the laser to turn off, "00000000" instructs the laser to emit full power, and an instruction such as "10000000" instructs the laser to emit one-half of the total available laser power.

A laser modulation file can be created in many ways. One such method is to construct the file graphically using a gray scale computer image with 256 gray levels. In such a gray scale image, black can represent full power and white can represent no power with the varying levels of gray in between representing intermediate power levels. A number of computer graphics programs can be used to visualize or create such a laser modulation file. Utilizing such a file, the power emitted by the laser is modulated on a pixel by pixel basis and can therefore directly sculpt a three dimensional topographical support member. While an 8-bit byte format is described here, other levels, such as 4 bit, 16 bit, 24 bit or other formats can be substituted.

A suitable laser for use in a laser modulation system for laser sculpting is a fast flow CO₂ laser with a power output of 2500 watts, although a laser of lower power output could be used. Of primary concern is that the laser must be able to switch power levels as quickly as possible. A preferred switching rate is at least 10 kHz and even more preferred is a rate of 20 kHz. The high power-switching rate is needed to be able to process as many pixels per second as possible, while maintaining a stable laser beam of consistent power.

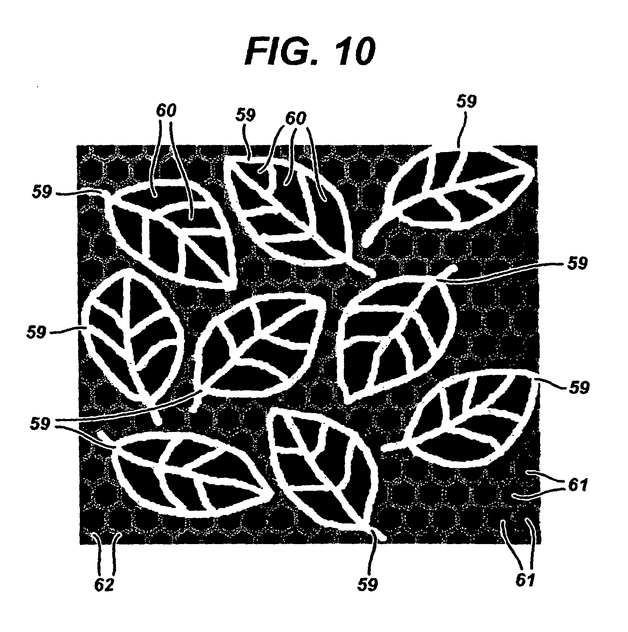

Figure 10 shows a graphical representation of a laser modulation file to produce a support member using laser modulation. As in the laser-drilling file of Figure 5, each pixel represents a position on the surface of the workpiece. Each row of pixels represents a position in the axial direction of the workpiece to be sculpted. Each column of pixels represents a position in the circumferential position of the workpiece. Unlike the file of Figure 5 however, each of the laser instructions represented by the pixels is no longer a binary instruction, but has been replaced by 8 bit or gray scale instruction. That is, each pixel has an 8-bit value, which translates to a specific laser power level.

The laser modulation file of Figure 10 shows a series of nine leaf-like structures 59, which are shown in white. The leaves are a series of white pixels and are instructions for the laser to be off and emit no power. Leaves of these shapes, therefore, would form the uppermost surface of the support member after the pattern has been sculpted into it. Each leaf structure contains a series of six holes 60, which are defined by the stem-like structures of the leaves and extend through the thickness of the workpiece. The holes 60 consist of an area of black pixels, which are instructions for the laser to emit full power and thus drill through the workpiece. The leaves are discrete macrofeatures, i.e., by themselves they do not form a continuous planar structure, as no leaf interconnects with any other leaf. The background pattern of this structure consists of a close-packed staggered pattern of hexagonal black areas 61, which are also instructions for the laser to emit full power and drill a hole through the workpiece. The region 62, which defines holes 61, is at a laser power level that is neither fully on nor fully off. This produces a second planar area, which is below the uppermost surface of the workpiece as defined by the off instructions of the white areas of the leaves.

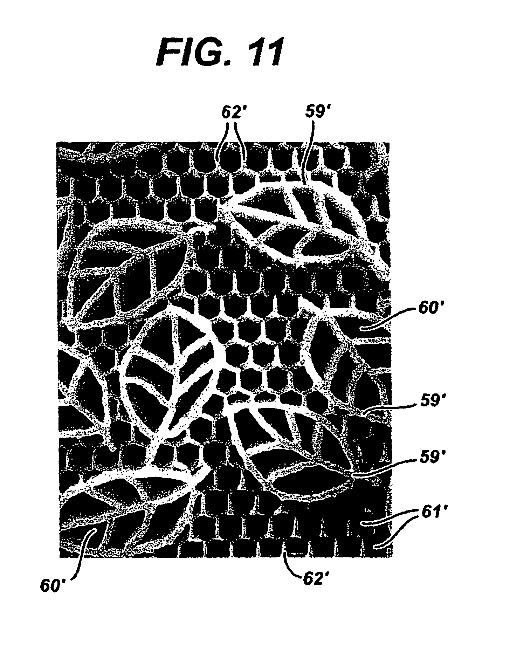

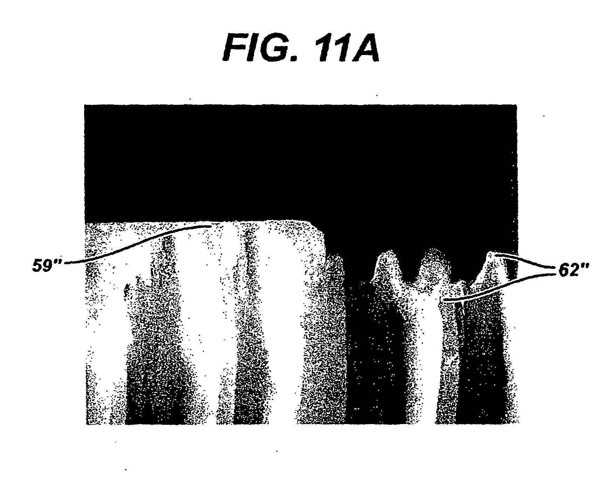

Figure 11 is a photomicrograph of the outside surface of a laser sculpted three dimensional, unitary topographical support member produced by laser modulation utilizing the laser modulation file depicted in Figure 10. Figure 11A is a cross-sectional view of the support member of Figure 11. Regions 59' of Figure 11 and 59" of Figure 11A correspond to the leaf 59 of Figure 10. The white pixel instructions of areas 59 of Figure 10 have resulted in the laser emitting no power during the processing of those pixels. The top surface of the leaves 59' and 59" correspond to the original surface of the workpiece. Holes 60' in Figure 11 correspond to the black pixel areas 60 of Figure 10, and in processing these pixels the laser emits full power, thus cutting holes completely through the workpiece. The background region 62' of Figure 11 and 62" of Figure 11A correspond to the pixel area of region 62 of Figure 10. Region 62' results from processing the pixels of Figure 10 with the laser emitting partial power. This produces an area in the support member that is lower than the original surface of the workpiece and that is thus lower than the top surface of the leaves. Accordingly, the individual leaves are discrete macrofeatures, unconnected to one another and of a scale to be readily discernible to the normal naked eye from a distance of about 12 inches.

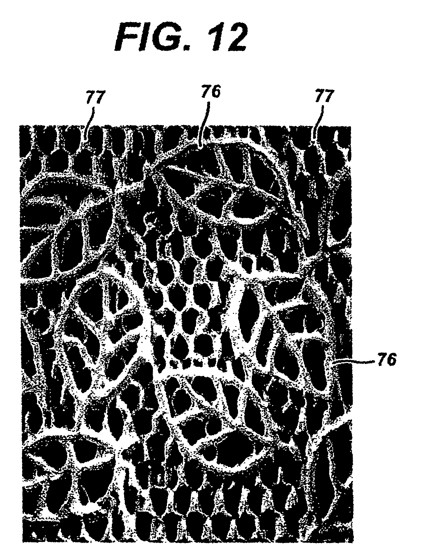

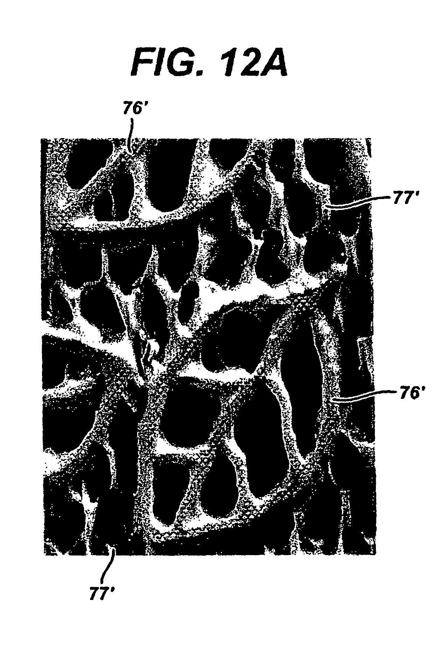

Figures 12 and 12A are photomicrographs of an apertured film that has been produced on the support member of Figures 11 and 11A. The apertured film has raised apertured leaf shaped regions 76 and 76', which correspond to the leaves 59' and 59" of the support member of Figures 11 and 11A. Each of the leaves is discrete, that is, disconnected from all the other leaves. The plane defined by the uppermost surfaces of all the leaf shaped regions 76 and 76' is the uppermost surface of a plurality of disconnected macrofeatures. The background regions 77 and 77' define a region that is at a lower depth in the film than the leaf shaped regions. This gives the visual impression that the leaves are embossed into the film.

The three dimensional geometries of the laser sculpted support members of Figures 6, 6A, 6B, 11, and 11A are simple geometries. That is, successive cross-sections, taken parallel to the uppermost surface of the support member, are essentially the same for a significant depth through the thickness of the support member. For example, referring to Figures 6 and 6A, successive cross-sections of this support member taken parallel to the surface of the support member are essentially the same for the depth of the groove 55 and 55', and then are again essentially the same from the lowermost depth of the groove through the thickness of the support member. Similarly, cross-sections of the support member of Figures 11 and 11A are essentially the same for the depth of the leaves and are essentially the same from the base of the leaves through the thickness of the support member.

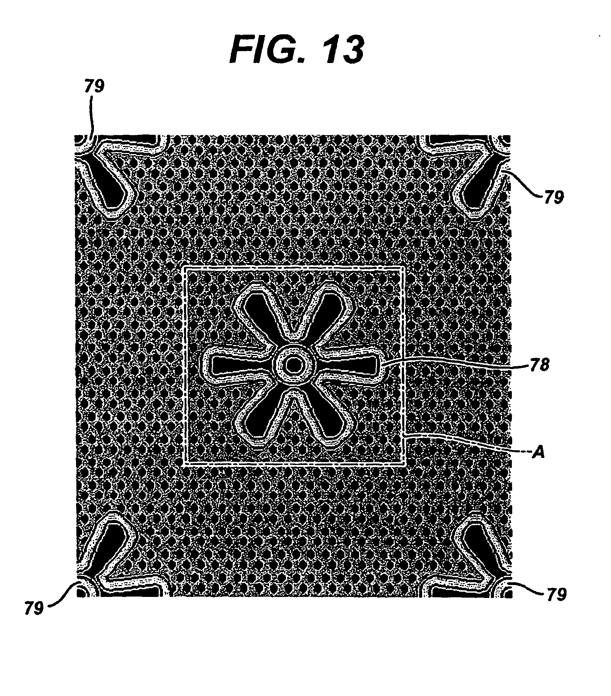

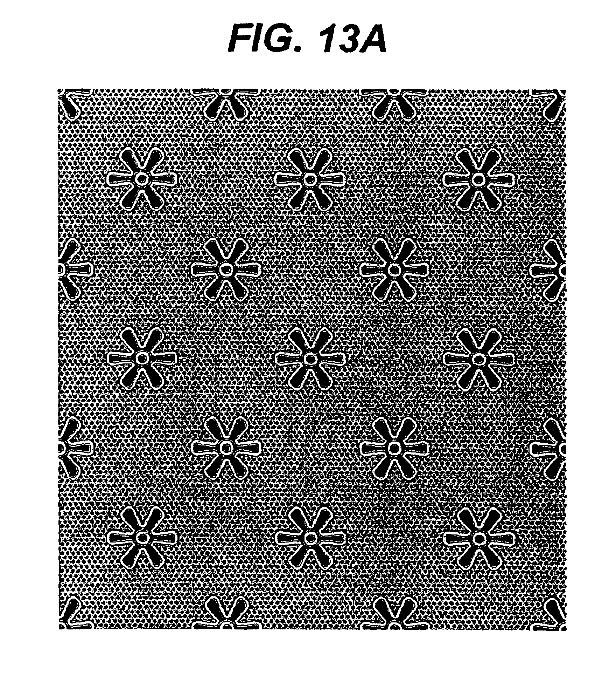

Figure 13 is a graphical representation of another laser modulation file to produce a laser sculpted support member using laser modulation. The file contains a central floral element 78 and four elements 79, each of which constitutes a quarter of a floral element 78, which combine when the file is repeated during laser sculpting. Figure 13A is a 3 repeat by 3 repeat graphical representation of the resulting pattern when the file of Figure 13 is repeated.

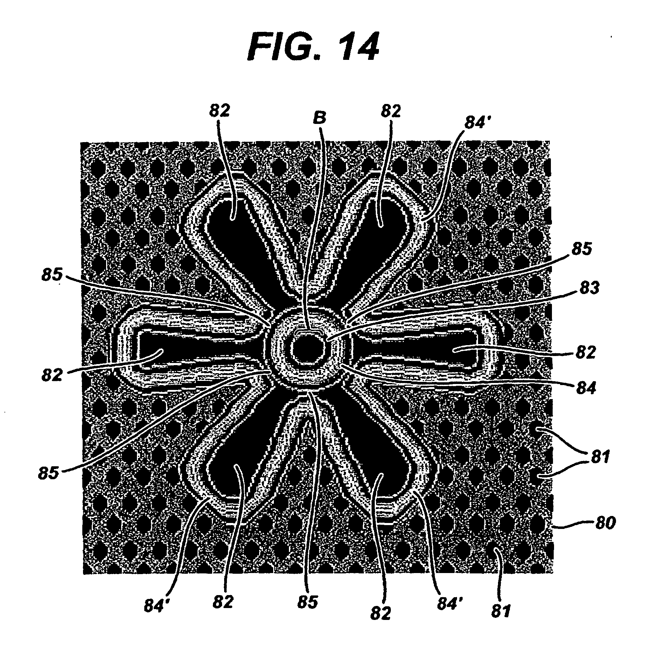

Figure 14 is a magnified view of the area A of Figure 13. The gray region 80 represents a region of pixels instructing the laser to emit partial power. This produces a planar area below the surface of the workpiece. Contained in gray region 80 is a series of black areas 81 which are pixels instructing for the laser to emit full power and drill a series of hexagonal shaped holes through the thickness of the workpiece. Central to Figure 14 is the floral element corresponding to the floral element 78 of Figure 13. The floral element consists of a center region 83 and six petal shaped regions 82 which again represent instructions for the laser to emit full power and drill a hole through the thickness of the workpiece. Defining the outside edge of the center region 83 is region 84. Defining the outside edge of the petal regions 82 is region 84'. Regions 84 and 84' represent a series of instructions for the laser to modulate the emitted power. The central black region 83 and its outside edge region 84 are joined to the region 84' by region 85 which represents instructions for the laser to emit the same power level as the background area of gray region 80.

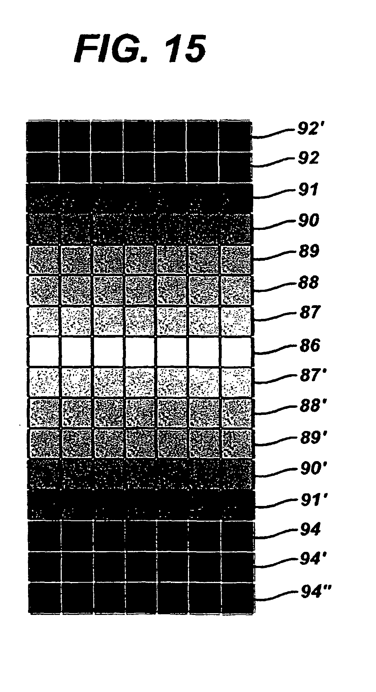

Figure 15 is an enlarged graphical representation of portion B of region 84 of Figure 14 which forms the outline of the center region 83 of Figure 14. The portion B contains a single row of white pixels 86 which instruct the laser to turn off. This defines a part of the uppermost surface of the support member that remains after processing. The rows of pixels 87 and 87' instruct the laser to emit partial power. The rows 88, 89, 90, and 91 and the rows 88', 89' 90', and 91' instruct the laser to emit progressively increased levels of power. Rows 92 and 92' instruct the laser to emit the power level also represented by region 85 of Figure 14. Rows 94, 94', and 94" instruct the laser to emit full power and form part of region 83 of Figure 14.

As each column of Figure 15 is processed, the laser emits the partial power represented by rows 92 and 92'. Rows 91, 90, 89, 88, and 87 instruct the laser to progressively decrease the power emitted, until row 86 is processed and the laser is instructed to not emit power. The rows 87', 88', 89', 90', and 91' then instruct the laser to again progressively increase the power emitted. Rows 94, 94', and 94" instruct the laser to again emit full power to begin drilling through the workpiece. This results in the creation of a disconnected macrofeature, which slopes from the background plane of region 85 to the surface of the workpiece and then slopes back to the hole area, thus producing a radiused shape.

Depending on the size of the pixels as defined during processing, and the variation in emitted laser power for each row, the size and shape of the resulting laser sculpted feature can be changed. For example, if the variation in power level for each row of pixels is small, then a relatively shallow rounded shape is produced; conversely, if the variation in power level for each row of pixels is greater, then a deep, steep shape with a more triangular cross-section is produced. Changes in pixel size also affect the geometry of the features produced. If the pixel size is smaller than the actual diameter of the focused laser beam emitted, then smooth blended shapes will be produced.

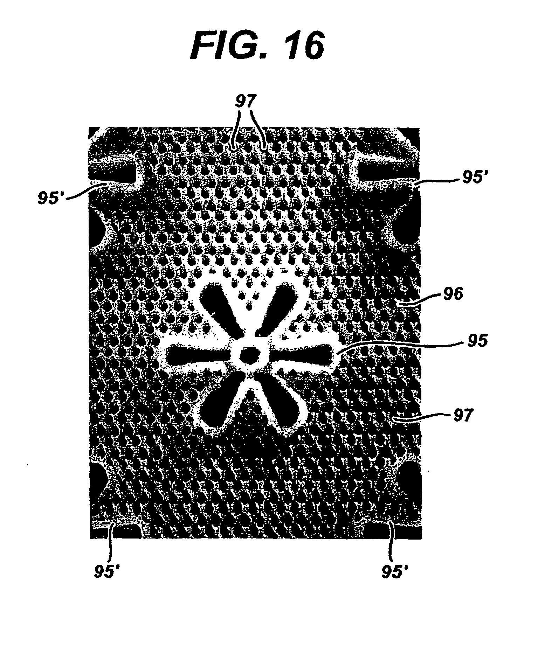

Figure 16 is a photomicrograph of the laser sculpted support member resulting from the processing of the file of Figure 13 by laser modulation. The photomicrograph shows a raised floral element 95, which corresponds to the floral element 78 of Figure 13 and the floral element of Figure 14. The photomicrograph also shows portions of additional floral elements 95'. Raised floral element 95 originates in the planar region 96, which contains holes 97. Floral elements 95 and 95' are disconnected from one another and thus do not form a continuous planar region.

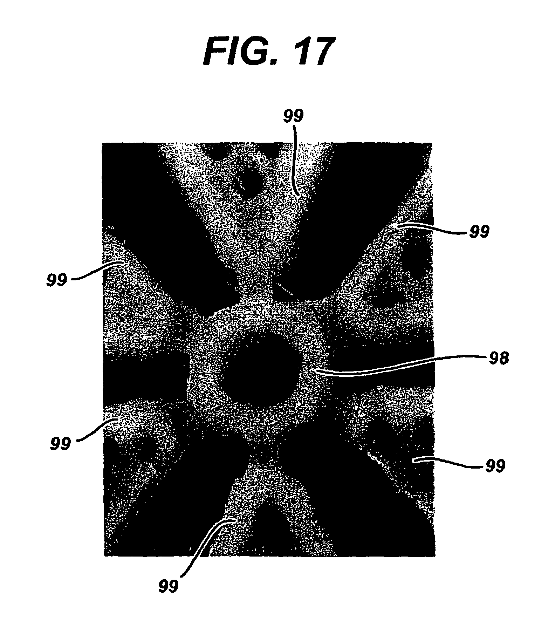

Figure 17 is an enlarged photomicrograph of a portion of the floral element 95 of Figure 16. The center circular element 98 is the area produced by the laser modulation instructions contained in region 84 of Figure 14. The elements 99 are parts of the petal elements of the floral element 95 of Figure 16. These petal elements are produced by the pixel instructions depicted in region 84' of Figure 14. These elements demonstrate an example of a type of complex geometry that can be created by laser modulation. The central circular element has a semicircular cross section. That is, any one of a series of cross-sectional planes taken parallel to the original surface of the workpiece, i.e., through the depth of the support member, will differ from any other of such cross-sectional planes.

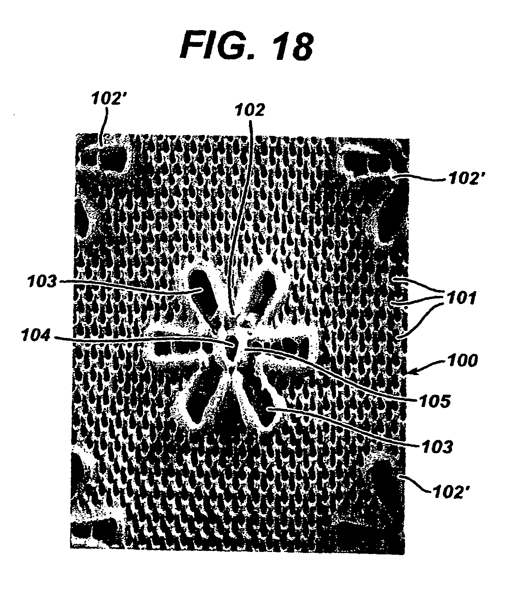

Figure 18 is a photomicrograph of the upper surface of a film produced on the support member of Figure 16. The film has an apertured planar area 100, containing holes 101 that corresponds to planar region 96 of Figure 16. Extending above the planar area are floral areas 102 and 102', which correspond to floral elements 95 and 95', respectively, of Figure 16. The floral areas 102 and 102' give the resulting apertured film an embossed appearance in a single operation. In addition, the floral areas define additional larger holes 103 and 104 to improve fluid transmission properties.

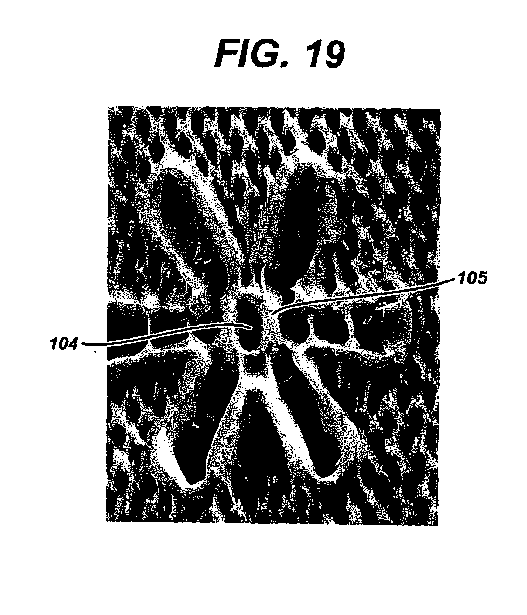

Figure 19 is an enlargement of floral area 102 of Figure 18. The floral area comprises hole 104 and the surrounding circular element 105. Element 105 of Figures 18 and 19 has a complex geometry in that it has a semicircular cross-section. Again, successive cross-sections parallel to the surface of the film taken through its depth are different.

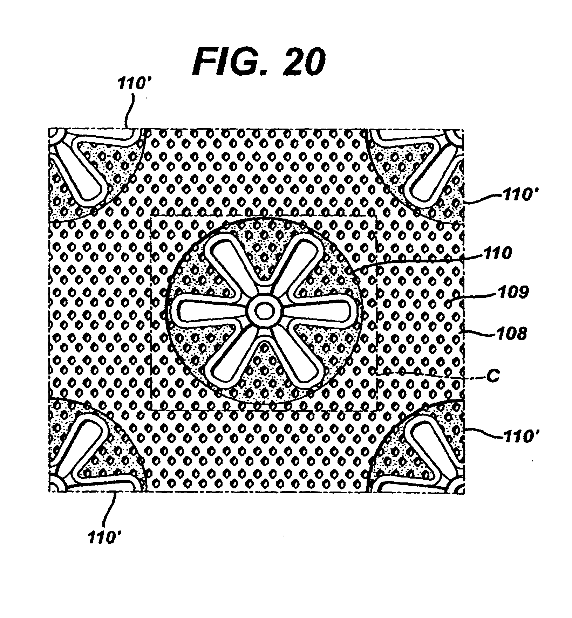

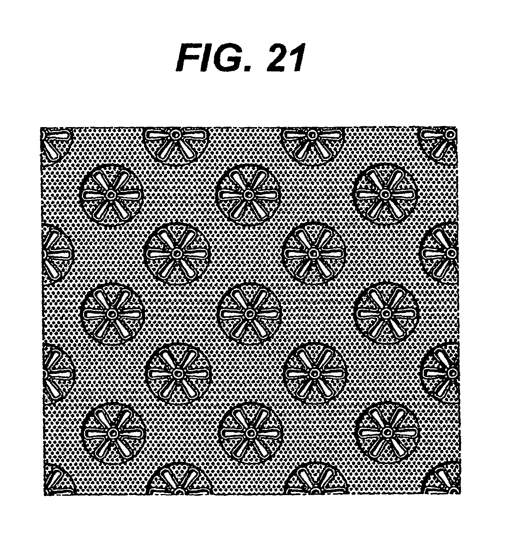

Figure 20 shows a graphical representation of a file to produce another example of a laser sculpted support member by laser modulation. Figure 20 depicts a planar region 108 containing holes 109. The planar region 108 is white and thus, is a region where the laser is instructed to not emit power. Therefore, this comprises the upper surface of the workpiece. Also contained within the planar region is depressed circular area 110, and quarter circle areas 110'. When this file is repeated, it produces a surface of staggered circular areas as shown graphically in Figure 21.

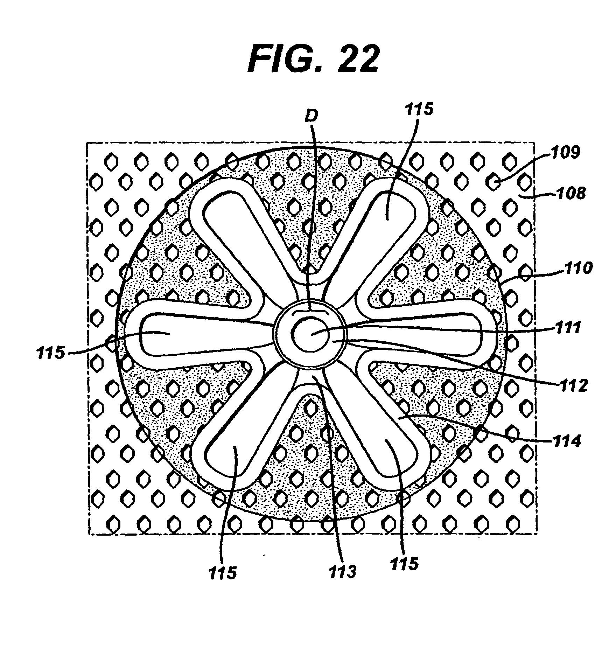

Figure 22 is an enlarged view of portion C of Figure 20, showing planar region 108 containing holes 109 and depressed circular area 110. Figure 22 also shows a floral element comprising a central circular hole 111 and six petal shaped holes 115. The central circular hole 111 is defined by region 112, and the petal shaped holes are defined by regions 114. Region 113 joins regions 112 and 114.

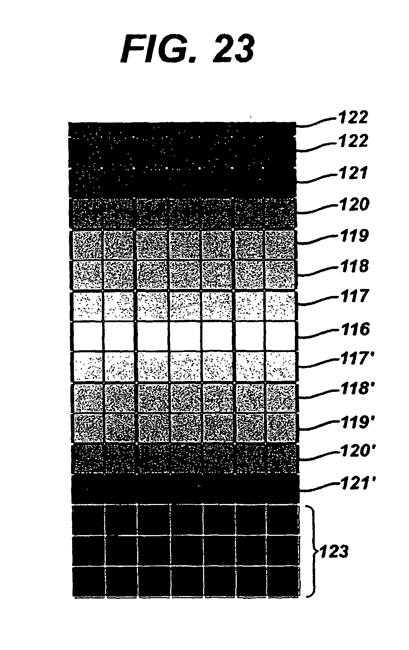

Figure 23 is a graphical representation of a portion of the laser instructions depicted in portion D of Figure 22. Row 122 is a representation of a series of instructions for the laser to emit partial power and thus form the depressed region 113. Row 123 instructs the laser to emit full power thus drilling through the workpiece and creating a hole 111. Row 116 instructs the laser to emit partial power and create the uppermost part of regions 112 and 114, which is still below the uppermost surface of the workpiece. Rows 117, 118, 119, 120, and 121; and rows 117', 118', 119', 120', and 121' are instructions for the laser to emit gradually changing levels of power. Thus as a column of the file is executed, the laser will emit the power level represented in row 122, then will gradually decrease the power emitted for rows 121, 120, 119, 118, and 117 until the power reaches a minimum power level at row 116. The laser power emitted will then gradually increase for row 117', 118', 119', 120', and 121'. Finally, the laser will emit full power in rows 123.

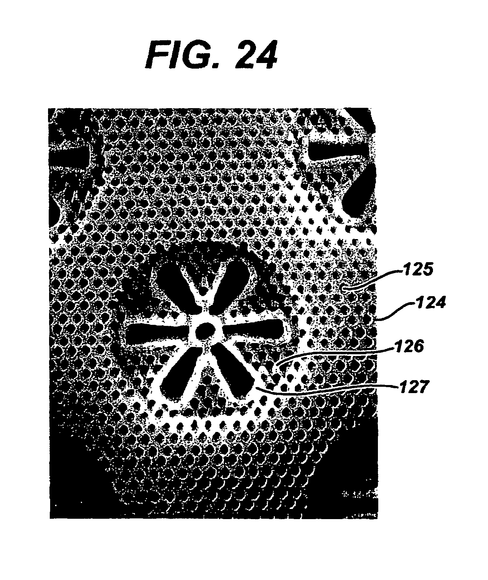

Figure 24 is a photomicrograph of a laser sculpted support member produced by the file represented in Figure 21. The resulting support member has a planar region 124 comprising the uppermost surface of the workpiece and holes 125. The support member has depressed regions 126, which correspond to region 110 of Figure 21. Each depressed region 126 also contains a floral element 127 as shown in Figure 22. The floral elements do not connect to the planar region 124 through a substantial thickness of the support member, and thus define a disconnected macrofeature on the surface of the support member.

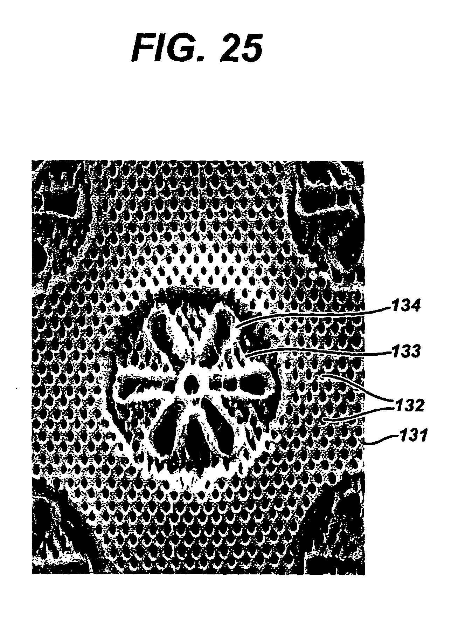

Figure 25 is a photomicrograph of the upper surface of a film produced on the support member of Figure 24. The film has an planar region 131, containing holes 132 that corresponds to region 124 of Figure 24. Depressed regions 133 correspond to depressed regions 126 of the support member of Figure 24, and contain floral elements 134.

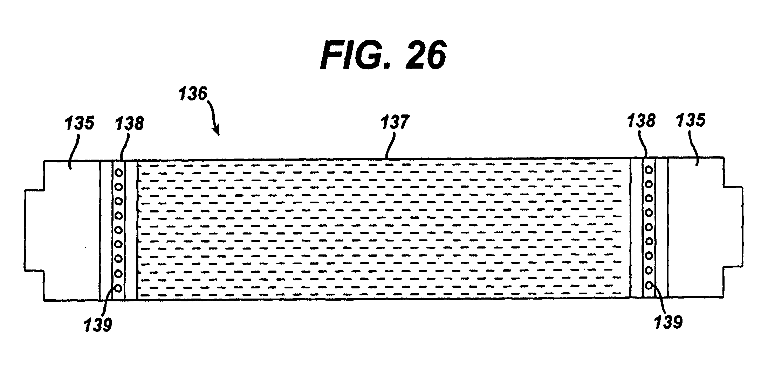

Upon completion of the laser sculpting of the workpiece, it can be assembled into the structure shown in Figure 26 for use as a support member. Two end bells 135 are fitted to the interior of the workpiece 136 with laser sculpted area 137. These end bells can be shrink-fit, press-fit, attached by mechanical means such as straps 138 and screws 139 as shown or by other mechanical means. The end bells provide a method to keep the workpiece circular, to drive the finished assembly, and to fix the completed structure in the aperturing apparatus.

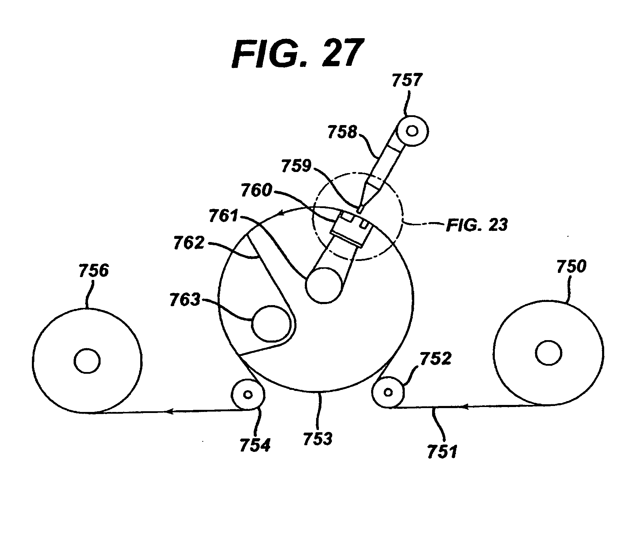

A preferred apparatus for producing apertured films in accordance with the present invention is schematically depicted in Figure 27. As shown here, the support member is a rotatable drum 753. In this particular apparatus, the drum rotates in a counterclockwise direction. Positioned outside drum 753 is a hot air nozzle 759 positioned to provide a curtain of hot air to impinge directly on the film supported by the laser sculpted support member. Means is provided to retract hot air nozzle 759 to avoid excessive heating of the film when it is stopped or moving at slow speed. Blower 757 and heater 758 cooperate to supply hot air to nozzle 759. Positioned inside the drum 753, directly opposite the nozzle 759, is vacuum head 760. Vacuum head 760 is radially adjustable and positioned so as to contact the interior surface of drum 753. A vacuum source 761 is provided to continuously exhaust vacuum head 760.

Cooling zone 762 is provided in the interior of and contacting the inner surface of drum 753. Cooling zone 762 is provided with cooling vacuum source 763. In cooling zone 762, cooling vacuum source 763 draws ambient air through the apertures made in the film to set the pattern created in the aperturing zone. Vacuum source 763 also provides means of holding the film in place in cooling zone 762 in drum 753, and provides means to isolate the film from the effects of tension produced by winding up the film after aperturing.

Placed on top of laser sculpted support member 753 is a thin, continuous, uninterrupted film 751 of thermoplastic polymeric material. This film may be vapor permeable or vapor impermeable; it may be embossed or unembossed; in may be corona-discharge treated on one or both of its major surfaces or it may be free of such corona-discharge treatment. The film may comprise any thermoplastic polymeric material including, but not limited to, polyolefins, such as high density polyethylene, linear low density polyethylene, low density polyethylene, polypropylene; copolymers of olefins and vinyl monomers, such as copolymers of ethylene and vinyl acetate or vinyl chloride; polyamides; polyesters; polyvinyl alcohol and copolymers of olefins and acrylate monomers such as copolymers of ethylene and ethyl acrylate and ethylenemethacrylate. Films comprising mixtures of two or more of such polymeric materials may also be used. The thickness of the starting film is preferably uniform and may range from about 0.5 to about 5 mils or about 0.0005 inch (0.0013 cm) to about 0.005 inch (0.076 cm). Coextruded films can be used, as can films that have been modified, e.g., by treatment with a surface active agent. The starting film can be made by any known technique, such as casting, extrusion, or blowing.

It should be noted that, in addition to films, the present invention can be practiced with nonwoven materials, many examples of which are known in the art. Suitable nonwoven materials include nonwoven fabrics made from any of a variety of fibers. The fibers may vary in length from a quarter of an inch or less to an inch and a half or more. It is preferred that when using shorter fibers (including wood pulp fiber) that the short fibers be blended with longer fibers. The fibers may be any of the well known artificial, natural or synthetic fibers, such as cotton, rayon, nylon, polyester, polyolefin, or the like. The nonwoven material may be formed by any of the various techniques well known in the art, such as carding, air laying, wet laying, melt-blowing, spunbonding and the like.

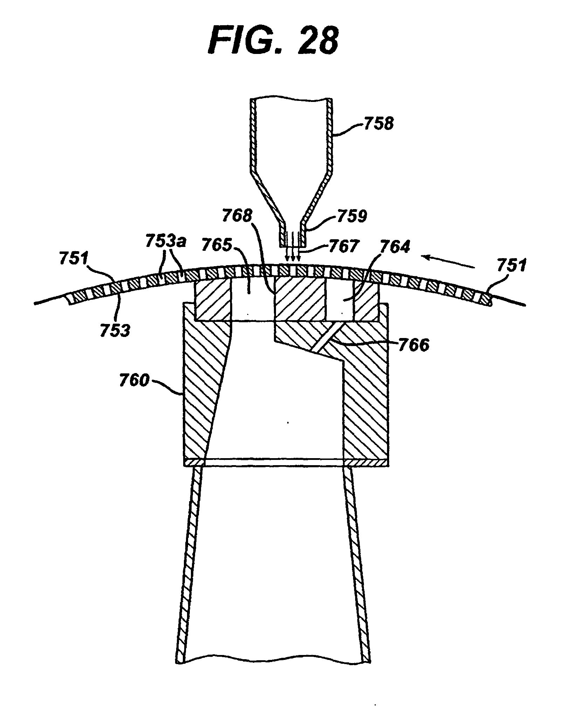

An enlargement of the circled area of Figure 27 is shown in Figure 28. As shown in this embodiment, vacuum head 760 has two vacuum slots 764 and 765 extending across the width of the film. However, for some purposes, it may be preferred to use separate vacuum sources for each vacuum slot. As shown in Figure 28, vacuum slot 764 provides a hold down zone for the starting film as it approaches air knife 758. Vacuum slot 764 is connected to a source of vacuum by a passageway 766. This anchors the incoming film 751 securely to drum 753 and provides isolation from the effects of tension in the incoming film induced by the unwinding of the film. It also flattens film 751 on the outer surface of drum 753. The second vacuum slot 765 defines the vacuum aperturing zone. Immediately between slots 764 and 765 is intermediate support bar 768. Vacuum head 760 is positioned such that the impingement point of hot air curtain 767 is directly above intermediate support bar 768. The hot air is provided at a sufficient temperature to cause the film to become softened and deformable by the vacuum force applied thereto. The geometry of the apparatus ensures that the film 751, when softened by hot air curtain 767, is isolated from tension effects by hold-down slot 764 and cooling zone 762 (Figure 27). Vacuum aperturing zone 765 is immediately adjacent hot air curtain 767, which minimizes the time that the film is hot and prevents excessive heat transfer to support member 753.

Referring to Figures 27 and 28, a thin flexible film 751 is fed from a supply roll 750 over idler roll 752. Roll 752 may be attached to a load cell or other mechanism to control the feed tension of the incoming film 751. The film 751 is then placed in intimate contact with the support member 753. The film and support member then pass to vacuum zone 764. In vacuum zone 764 the differential pressure further forces the film into intimate contact with the support member 753. The vacuum pressure then isolates the film from the supply tension. The film and support member combination then passes under hot air curtain 767. The hot air curtain heats the film and support member combination, thus softening the film.

The heat-softened film and the support member combination then pass into vacuum zone 765 where the heated film is deformed by the differential pressure and assumes the topography of the support member. The heated film areas that are located over open areas in the support member are further deformed into the open areas of the support member. If the heat and deformation force are sufficient, the film over the open areas of the support member is ruptured to create apertures.

The still-hot apertured film and support member combination then passes to cooling zone 762. In the cooling zone a sufficient quantity of ambient air is pulled through the now-apertured film to cool both the film and the support member.

The cooled film is then removed from the support member around idler roll 754. Idler roll 754 may be attached to a load cell or other mechanism to control winding tension. The apertured film then passes to finish roll 756.

While the method of forming an apertured film has been described using a hot air curtain as the mechanism to heat the film, any suitable method such as infrared heating, heated rolls, or the like may be employed to produce an apertured film using the laser sculpted three dimensional topographical support member of this invention.

For instance, the film may be made by extrusion immediately prior to being positioned over the support member. In this case, an extrusion system provides a film extrudate, which, depending on its temperature, can either be cooled to a suitable temperature before positioning over the support member or be positioned over the support member without intermediate cooling. If required, cooling may be achieved by various means such as a cold air blast or use of a chilled roll. In either case, the film extrudate and forming surface are then subjected to the same vacuum forming forces as described above without the need to heat the film to soften it and make it deformable.

## Claims

1. A process for the preparation of an apertured, three dimensional film, which comprises:
a) forming a three dimensional topographical support member (Fig. 1) by moving a laser beam (36) across the outside surface (1000) of a workpiece (2) while modulating the power of the laser beam (36), thereby sculpting the outside surface (1000) of the workpiece (2);
b) positioning a film across the sculpted, outside surface (1000) of the support member (Fig. 1); and
c) deforming the film such that its shape conforms to the outside surface (1000) of the support member (Fig. 1).

2. The process of claim 1, wherein the workpiece is rotated while moving the laser beam across the outside surface of the workpiece.

3. The process of claim 1 or claim 2, wherein sculpting of the outside surface of the workpiece forms a plurality of macrofeatures projecting from the outside surface by at least about 0.127 millimetres (0.005 inches), said macrofeatures each having a maximum dimension in the plane of the outside surface greater than about 0.1524 millimetres (0.006 inches).

4. The process of any one of claims 1 to 3, wherein the workpiece is made of acetal, an acrylic, a urethane, a polyester or a high molecular weight polyethylene.

5. The process of any one of claims 1 to 4, wherein the workpiece is a seamless, hollow cylinder.

6. The process of any one of claims 1 to 5, wherein said modulation is controlled by a control means that adjusts the power of the laser beam according to a series of predetermined instructions.

7. The process of claim 6, wherein the control means comprises a computer.

8. A process for the preparation of an apertured, three-dimensional film comprising a plurality of disconnected macrofeatures thereon, comprising:
a) positioning a film across an outside surface of a three-dimensional topographical support member (Fig. 1), formed via the forming step of claim 1, said outside surface being contoured and comprising a plurality of disconnected macrofeatures; and
b) deforming the film such that its shape conforms to the contoured surface of the support member.

9. The process of claim 8, wherein the disconnected macrofeatures project from the outside surface of the support member by at least about 0.127 millimetres (0.005 inches) and each have a maximum dimension in the plane of the outside surface greater than 0.1524 millimetres (0.006 inches).

10. The process of claim 8 or claim 9, wherein deformation of the film is performed by drawing a vacuum at the surface of the film.

11. The process of claim 10, wherein the support member is a rotatable, hollow cylinder, and wherein the vaccum is drawn from inside the cylinder.

12. The process of any one of claims 1 to 11, wherein the film is heated prior to positioning the film across the outside surface of the support member.

13. The process of claim 12, wherein the film is heated by directing a stream of hot air against the film.

14. The process of claim 12 or claim 13, wherein the film is cooled after it has been deformed.

15. The process of any one of claims 1 to 14, wherein, prior to positioning the film across the outside surface of the support member, the film is made by extrusion.

16. The process of claim 15, wherein the film is cooled after the film has been extruded but before the film is positioned across the outside surface of the support member.

17. The process of any one of claims 1 to 16, wherein the film comprises a thermoplastic material.

## Patentansprüche

1. Verfahren zur Herstellung eines gelochten dreidimensionalen Filmes, das aufweist:
a) Ausbilden eines dreidimensionalen topografischen Trägerelementes (Fig. 1), indem ein Laserstrahl (36) über die Außenfläche (1000) eines Werkstückes (2) bewegt wird, wobei die Leistung des Laserstrahles (36) moduliert wird, so daß die Außenfläche (1000) des Werkstücks (2) profiliert wird;
b) Positionieren eines Films über die profilierte Außenfläche (1000) des Trägerelementes (Fig. 1); und
c) Deformieren des Films derart, daß seine Form der Außenfläche (1000) des Trägerelementes (Fig. 1) entspricht.

2. Verfahren nach Anspruch 1, bei dem das Werkstück gedreht wird, während der Laserstrahl über die Außenfläche des Werkstückes bewegt wird.

3. Verfahren nach Anspruch 1 oder Anspruch 2, bei dem das Profilieren der Außenfläche des Werkstücks eine Vielzahl von Makromerkmalen ausbildet, die von der Außenfläche wenigstens ungefähr 0.127 mm (0.005 Zoll) hervorstehen, wobei die Makromerkmale jeweils eine maximale Abmessung in der Ebene der Außenfläche haben, die größer ist als ungefähr 0.1524 mm (0.006 Zoll).

4. Verfahren nach einem der Ansprüche 1 bis 3, bei dem das Werkstück aus Acetal, einem Acrylharz, einem Urethan, einem Polyester oder einem Polyethylen mit hohem Molekulargewicht hergestellt ist.

5. Verfahren nach einem der Ansprüche 1 bis 4, bei dem das Werkstück ein nahtloser Hohlzylinder ist.

6. Verfahren nach einem der Ansprüche 1 bis 5, bei dem die Modulation durch eine Steuereinrichtung gesteuert wird, welche die Leistung des Laserstrahles entsprechend einer Anzahl vorbestimmter Befehle einstellt.

7. Verfahren nach Anspruch 6, bei dem die Steuereinrichtung einen Computer aufweist.

8. Verfahren zur Herstellung eines gelochten dreidimensionalen Filmes mit einer Vielzahl nicht miteinander verbundener Makromerkmale darauf, das aufweist:
a) Positionieren eines Films über eine Außenfläche eines dreidimensionalen topografischen Trägerelementes (Fig. 1), das durch den Ausbildeschritt des Anspruchs 1 gebildet ist, wobei die Außenfläche konturiert ist und eine Vielzahl nicht miteinander verbundener Makromerkmale aufweist; und
b) Deformieren des Films derart, daß seine Form der konturierten Fläche des Trägerelementes entspricht.

9. Verfahren nach Anspruch 8, bei dem die nicht miteinander verbundenen Makromerkmale von der Außenfläche des Trägerelementes um wenigstens ungefähr 0.127 mm (0.005 Zoll) hervorstehen und jedes eine maximale Abmessung in der Ebene der Außenfläche hat, die größer ist als 0.152 mm (0.006 Zoll).

10. Verfahren nach Anspruch 8 oder Anspruch 9, bei dem die Deformation des Films durch Anlegen eines Vakuums an die Oberfläche des Films vorgenommen wird.

11. Verfahren nach Anspruch 10, bei dem das Trägerelement ein drehbarer Hohlzylinder ist und bei dem das Vakuum von innerhalb des Zylinders angelegt wird.

12. Verfahren nach einem der Ansprüche 1 bis 11, bei dem der Film vor dem Positionieren des Films über der Außenfläche des Trägerelementes erwärmt wird.

13. Verfahren nach Anspruch 12, bei dem der Film erwärmt wird, indem ein Strom heißer Luft gegen den Film gerichtet wird.

14. Verfahren nach Anspruch 12 oder Anspruch 13, bei dem der Film gekühlt wird, nachdem er deformiert worden ist.

15. Verfahren nach einem der Ansprüche 1 bis 14, bei dem, bevor der Film über die Außenfläche des Trägerelementes positioniert wird, der Film durch Extrusion hergestellt wird.

16. Verfahren nach Anspruch 15, bei dem der Film gekühlt, nachdem der Film extrudiert worden ist, jedoch bevor der Film über die Außenfläche des Trägerelementes positioniert wird.

17. Verfahren nach einem der Ansprüche 1 bis 16, bei dem der Film ein thermoplastisches Material aufweist.

## Revendications

1. Procédé de préparation d'un film perforé en trois dimensions, qui comprend :
a) la formation d'un élément de support topographique en trois dimensions (figure 1) en déplaçant un faisceau laser (36) sur la surface extérieure (1000) d'une pièce à usiner (2) tout en modulant la puissance du faisceau laser (36), sculptant ainsi la surface extérieure (1000) de la pièce à usiner (2) ;
b) le positionnement d'un film sur la surface extérieure sculptée (1000) de l'élément de support (figure 1) ; et
c) la déformation du film de telle sorte que sa forme se conforme à la surface extérieure (1000) de l'élément de support (figure 1).

2. Procédé selon la revendication 1, dans lequel la pièce à usiner est tournée tout en déplaçant le faisceau laser sur la surface extérieure de la pièce à usiner.

3. Procédé selon la revendication 1 ou la revendication 2, dans lequel la sculpture de la surface extérieure de la pièce à usiner forme une pluralité de macro détails se projetant depuis la surface extérieure sur au moins environ 0,127 millimètre (0,005 pouce), lesdits macro détails possédant chacun une dimension maximale dans le plan de la surface extérieure supérieure à environ 0,1524 millimètre (0,006 pouce).

4. Procédé selon l'une quelconque des revendications 1 à 3, dans lequel la pièce à usiner est constituée d'acétal, d'un acrylique, d'un uréthane, d'un polyester ou d'un polyéthylène à masse moléculaire élevée.

5. Procédé selon l'une quelconque des revendications 1 à 4, dans lequel la pièce à usiner est un cylindre creux sans soudure.

6. Procédé selon l'une quelconque des revendications 1 à 5, dans lequel ladite modulation est contrôlée par un moyen de contrôle qui ajuste la puissance du faisceau laser selon une série d'instructions prédéterminées.

7. Procédé selon la revendication 6, dans lequel le moyen de contrôle comprend un ordinateur.

8. Procédé de préparation d'un film perforé en trois dimensions comprenant une pluralité de macro détails non reliés dessus, comprenant :
a) le positionnement d'un film sur une surface extérieure d'un élément de support topographique en trois dimensions (figure 1), formé via l'étape de formation de la revendication 1, ladite surface extérieure étant à contours et comprenant une pluralité de macro détails non reliés ; et
b) la déformation du film de telle sorte que sa forme se conforme à la surface à contours de l'élément de support.

9. Procédé selon la revendication 8, dans lequel les macro détails non reliés se projettent à partir de la surface extérieure de l'élément de support sur au moins environ 0,127 millimètre (0,005 pouce) et possèdent chacun une dimension maximale dans le plan de la surface extérieure supérieure à 0,1524 millimètre (0,006 pouce).

10. Procédé selon la revendication 8 ou la revendication 9, dans lequel la déformation du film est effectuée en extrayant un vide à la surface du film.

11. Procédé selon la revendication 10, dans lequel l'élément de support est un cylindre creux rotatif, et dans lequel le vide est extrait depuis l'intérieur du cylindre.

12. Procédé selon l'une quelconque des revendications 1 à 11, dans lequel le film est chauffé avant de positionner le film sur la surface extérieure de l'élément de support.

13. Procédé selon la revendication 12, dans lequel le film est chauffé en dirigeant un flux d'air chaud contre le film.

14. Procédé selon la revendication 12 ou la revendication 13, dans lequel le film est refroidi après qu'il ait été déformé.

15. Procédé selon l'une quelconque des revendications 1 à 14, dans lequel, avant de positionner le film sur la surface extérieure de l'élément de support, le film est créé par extrusion.

16. Procédé selon la revendication 15, dans lequel le film est refroidi après que le film ait été extrudé, mais avant que le film ne soit positionné sur la surface extérieure de l'élément de support.

17. Procédé selon l'une quelconque des revendications 1 à 16, dans lequel le film comprend un matériau thermoplastique.
